# EUROPEAN PATENT APPLICATION

(11) **EP 4 599 897 A1**
(43) Date of publication of application: **13.08.2025**
(21) Application number: 25155870.6
(22) Date of filing: 04.02.2025
(51) Int. Cl.: A62B 7/14, A62B 18/08, A62B 25/00, A62B 18/02

(54) **COLLAPSIBLE PASSENGER PROTECTIVE BREATHING EQUIPMENT**

(30) Priority: 05.02.2024 US 202418432822
(71) Applicant: B/E Aerospace, Inc., Winston-Salem, NC 27105 (US)
(72) Inventor: MCDONALD, Thomas K., Overland Park, 66215 (US); ZIMMER, Rebekah, Lenexa, 66215 (US)
(74) Representative: Dehns

(57) **Abstract**

An oxygen mask (400) is disclosed herein. The oxygen mask (400) includes a first flexible material (402) having a first surface and a second surface, a first spring (404) disposed circumferentially around the first flexible material (402), the first spring (404) providing structural support to the oxygen mask (400) along a first plane, wherein the first flexible material (402) and the first spring (404) define an interior of the oxygen mask (400), an air valve (412) configured to allow air to pass from the interior of the oxygen mask (400) to an exterior of the oxygen mask (400), an air hose (410) coupled to the oxygen mask (400) and configured to allow an air flow into the oxygen mask (400), and a strap (408) coupled to the first flexible material (402) and the first spring (404), wherein the strap (408) is configured to pull the first flexible material (402) and the first spring (404) to conform to a 3D surface.

## Description

### TECHNICAL FIELD

The present disclosure generally relates personal protective breathing equipment, and more particularly, to personal protective breathing equipment for use on airplanes.

### BACKGROUND

Passenger aircraft, such as commercial airplanes, including a passenger cabin with passenger seats, are usually equipped with aircraft overhead passenger service units ("PSUs"). The overhead PSUs are typically located above the passenger seats. Such aircraft overhead PSUs typically include individually switchable passenger reading lights, air gaspers for supplying fresh air to the passengers, loudspeakers, and switchable visual signs. The aircraft overhead PSUs units may further include oxygen masks, which may be released and activated for supplying an oxygen rich gas to the passengers in emergency situations, in particular in emergency situations which result in a loss of air pressure (hypoxia), smoke, or toxic gas within the aircraft passenger cabin.

In order to provide the desired functionalities in a satisfactory manner, the oxygen masks are packed inside the PSUs in a manner that allow them to fall from the PSUs for passenger use. Packing the oxygen masks tends to be time consuming, and at times complicated, due to the supply hoses and the oxygen masks themselves. During the packing process, masks and hoses cannot be packed too tight as to not deploy or effect door closure, but also cannot be packed loosely and become tangled. Each oxygen mask typically only covers the nose and mouth of the passenger. The typical cup shaped design of current oxygen masks may not be intuitive to use resulting in poor placement of the oxygen mask by the passenger. The poor placement tends to reduce the effectiveness of the oxygen mask.

### SUMMARY

Disclosed herein is an oxygen mask including a first flexible material having a first surface and a second surface, a first spring disposed circumferentially around the first flexible material, the first spring providing structural support to the oxygen mask along a first plane, wherein the first flexible material and the first spring define an interior of the oxygen mask, an air valve configured to allow air to pass between the interior of the oxygen mask and an exterior of the oxygen mask, an air hose coupled to the oxygen mask and configured to allow an air flow into the oxygen mask, and a strap coupled to the first flexible material and the first spring, wherein the strap is configured to pull the first flexible material and the first spring to conform to a 3D surface.

In various embodiments, the oxygen mask further includes a second spring disposed laterally across the first flexible material and providing structural support to the oxygen mask along a second plane that is orthogonal to the first plane. In various embodiments, the air valve is coupled to the first flexible material. In various embodiments, the air hose is coupled to the first flexible material. In various embodiments, the oxygen mask further includes a second flexible material including an opening formed therethrough, the second flexible material defining a first portion of the oxygen mask and a flexible clear film coupled to the second flexible material, the flexible clear film defining a second portion of the oxygen mask.

In various embodiments, the oxygen mask further includes a flexible plate coupled to the second flexible material and configured to cover the opening formed in the second flexible material, wherein the air hose is coupled to the flexible plate, and wherein the air valve is coupled to the flexible plate. In various embodiments, the air hose is configured to detach from the oxygen mask in response to a force applied to the air hose.

Also disclosed herein is a full face oxygen mask, including a first flexible material including a first opening formed therethrough, the first flexible material configured to contact a face of a passenger and the face of the passenger passing through the first opening, a first spring coupled to the first flexible material and disposed around an outer circumference of the first flexible material, the first spring is configured to provide support to the first flexible material in a first plane, a second flexible material coupled to the first spring and the first flexible material, the second flexible material including a second opening formed therethrough, a flexible clear film coupled to the first flexible material and the second flexible material, wherein the second flexible material and the flexible clear film are configured to provide support to the full face oxygen mask in a second plane that is orthogonal to the first plane, a flexible plate coupled to the second flexible material and covering the second opening, an air hose coupled to the flexible plate and configured to provide air to the full face oxygen mask, an air valve coupled to the flexible plate and configured to allow air to pass through the flexible plate, a strap coupled to the first flexible material and the first spring, the strap configured to secure the full face oxygen mask to a 3D surface, including conforming the first flexible material and the first spring to a 3D surface.

In various embodiments, the full face oxygen mask further includes a rebreather reservoir coupled to the first flexible material and the second flexible material, the rebreather reservoir configured to store an amount of air for use after disconnecting the air hose. In various embodiments, the full face oxygen mask further includes a second spring coupled to the second flexible material and the flexible clear film, the second spring providing structural support in the second plane. In various embodiments, the full face oxygen mask further includes an inflatable structure coupled to the first flexible material and configured to inflate in response to air from the air hose, wherein the inflatable structure is disposed circumferentially around the first flexible material.

In various embodiments, the full face oxygen mask further includes an integrated air filter disposed between the first flexible material and the second flexible material, wherein the integrated air filter is exposed to the air in response to the air hose disconnecting from the full face oxygen mask. In various embodiments, the integrated air filter includes an activated filter media. In various embodiments, the first flexible material has an oval shape and the second flexible material has a geometric shape.

Also disclosed herein is an oronasal passenger mask, including a first flexible material having a first surface and a second surface, a first spring disposed circumferentially around the first flexible material, the first spring providing structural support to the oronasal passenger mask along a first plane, wherein the first flexible material and the first spring define an interior of the oronasal passenger mask, a second spring disposed laterally across the first flexible material and providing structural support to the oronasal passenger mask along a second plane that is orthogonal to the first plane, an air valve coupled to the first flexible material and configured to allow air to pass from the interior of the oronasal passenger mask to an exterior of the oronasal passenger mask, an air hose coupled to the first flexible material and configured to allow an air flow into the oronasal passenger mask, and a strap coupled to the first flexible material and the first spring.

In various embodiments, a first portion of the first flexible material extends from a first side to overlap a second portion of the first flexible material that extends from a second side opposite the first side. In various embodiments, the first spring and the second spring are configured to be folded onto themselves into stored state. In various embodiments, the first spring and the second spring are configured to expand the oronasal passenger mask from the stored state to an expanded state for use.

In various embodiments, the strap is configured to pull the first flexible material and the first spring to conform to a 3D surface. In various embodiments, the oronasal passenger mask further includes an integrated air filter, wherein the integrated air filter is exposed in response to the air hose being removed.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a schematic side view of an aircraft in accordance with various embodiments.
FIG. 2 illustrates a schematic cross-sectional view of a section of a passenger cabin of an aircraft, in accordance with various embodiments.
FIG. 3 illustrates a schematic plan view of an aircraft overhead passenger service unit, in accordance with various embodiments.
FIGS. 4A and 4B illustrate an oronasal collapsible passenger protective breathing equipment, in accordance with various embodiments.
FIGS. 5A, 5B, 5C, 5D, and 5E illustrate a full face collapsible passenger protective breathing equipment, in accordance with various embodiments.
FIGS. 6A, 6B, and 6C illustrate a method of folding and storing a collapsible passenger protective breathing equipment, in accordance with various embodiments.
FIGS. 6D, 6E, 6F, and 6G illustrate storage and retrieval of a collapsible passenger protective breathing equipment, in accordance with various embodiments.
FIGS. 7A and 7B illustrate a method of folding a ring for use with a collapsible passenger protective breathing equipment, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein are various embodiments of collapsible passenger protective breathing equipment for use in aircraft. The collapsible passenger protective breathing equipment ("PPBE"), in various embodiments, may pack into a smaller space than conventional passenger oxygen masks and may be larger in size when in use, more intuitive to use, and provide additional protections. In various embodiments, the collapsible PPBE may include a spring element or ring that is configured to be twisted, or coiled, so that the PPBE folds into a substantially smaller shape for storage. In various embodiments, the spring ring may be configured to expand the PPBE into a full size mask for use by a passenger. In various embodiments, the PPBE may be configured to cover the nose and mouth of a passenger. In various embodiments, the PPBE may be configured to cover the nose, the mouth, and the eyes of the passenger.

In various embodiments, the PPBE may include an air filter configured to filter smoke or other debris/particulate matter from the air. In various embodiments, the PPBE may be configured to disconnect from the aircraft so that the passenger can exit the aircraft while wearing the PPBE. In various embodiments, the PPBE includes flexible materials that expand for use. In various embodiments, the flexible material is configured to conform to a wide range of size and shape of face and head of the passenger using a strap to pull and shape the mask. In a typical year, aircraft tend to experience more emergency events including smoke and/or toxic gas than emergency events including depressurization. Accordingly, the full face PPBE disclosed herein protects the eyes of the passenger as well as providing oxygen for the passenger. In various embodiments, the full face PPBE tends to reduce irritants from entering the eyes, improve the vision of the passenger, and/or reduce panic and/or disorientation from discomfort or reduced vision.

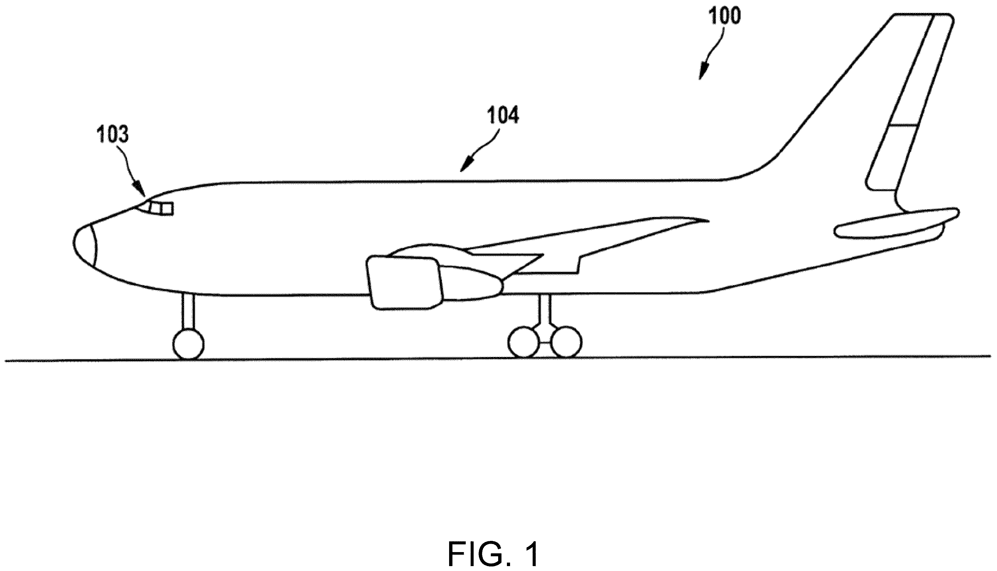

Referring now to FIG. 1, a schematic side view of an aircraft 100, in particular of an air plane, is illustrated, in accordance with various embodiments. Aircraft 100 includes a cockpit 103 and a passenger cabin 104. Aircraft 100 may be a commercial passenger air plane, a private air plane, or a military aircraft, among others.

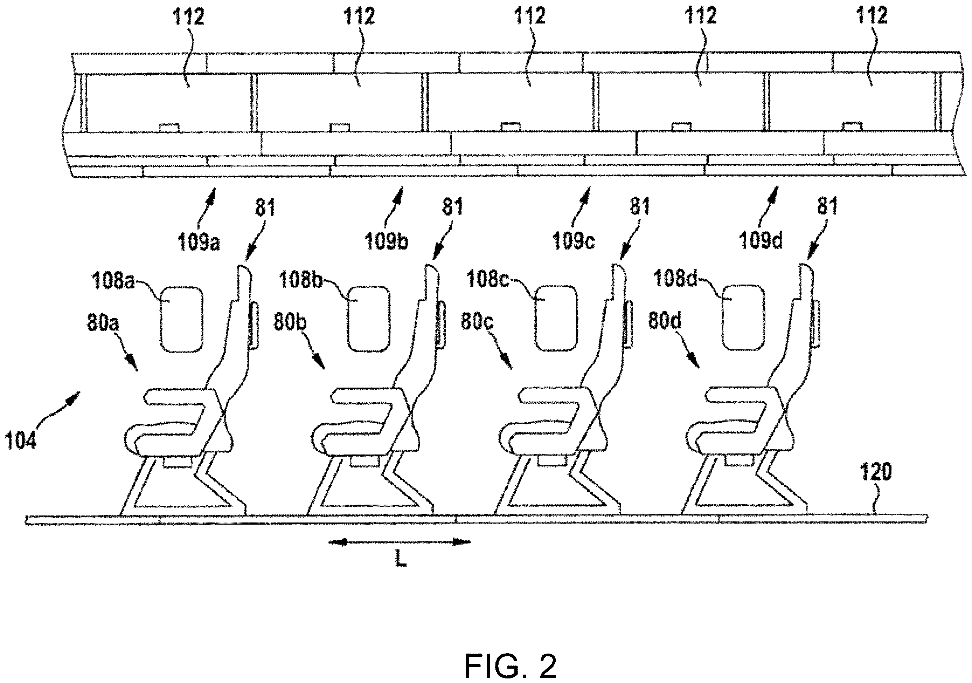

Referring now to FIG. 2, a schematic longitudinal cross-sectional view of a section of passenger cabin 104 of aircraft 100 is illustrated, in accordance with various embodiments. Passenger cabin 104 includes passenger seats 81, with four passenger seats 81 visible. Passenger seats 81 are mounted to a floor 120 of passenger cabin 104. Each of the depicted passenger seats 81 belongs to a different seat row 80a-80d. Seat rows 80a-80d are spaced apart from each other along the longitudinal direction L of passenger cabin 104. Each of the seat rows 80a-80d includes a window 108a-108d which allows the passengers to view the outside of aircraft 100. Further, a plurality of overhead baggage compartments 112, which provide storage space for the passengers' baggage, are provided above the passenger seats 81.

Each seat row 80a-80d may include a plurality of passenger seats 81, for example three passenger seats 81, which are arranged next to each other. The additional passenger seats (middle seat and window seat) of each seat row 80a-80d are not visible in FIG. 2, as they are arranged behind and therefore hidden by the depicted passenger seats (aisle seats) 81. Cabin 104 further includes aircraft overhead passenger service units 109a-109d located above each of the seat rows 80a-80d, respectively.

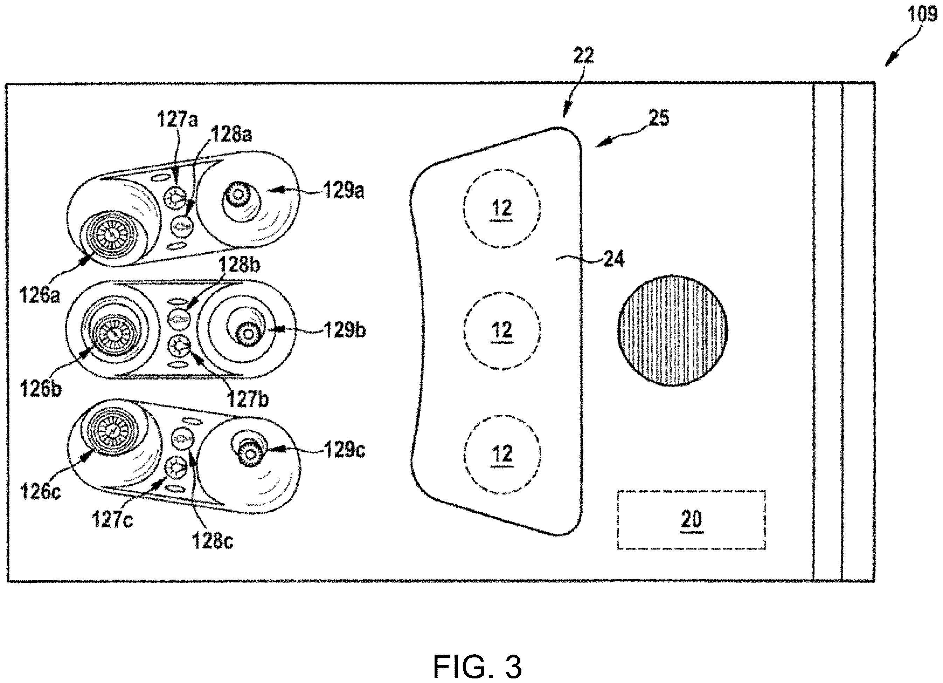

Referring now to FIG. 3, a schematic plan view of an aircraft overhead passenger service unit 109 is illustrated, in accordance with various embodiments. Passenger service unit 109 includes a row of three adjustable reading lights 126a-126c and six electrical switches 127a-127c, 1281-128c adjacent reading lights 126a-126c. Passenger service unit 109 further includes a row of three adjacent gaspers 129a-129c, or air valves, that are adjacent switches 127a-127c, 128a-128c.

An oxygen supply and mask storage portion 25 is located adjacent gaspers 129a-129c. Oxygen supply and mask storage portion 25 includes a movable door 24, which covers an oxygen mask storage compartment 22. Oxygen mask storage compartment 22 houses at least three oxygen masks 12, which are coupled to an oxygen supply 20, for example to an oxygen supply 20 such as a manifold, a pressurized oxygen container, or a chemical oxygen generator.

In an emergency situation, which results in a loss of pressure, a fire, or similar within passenger cabin 104, movable door 24 will open and allow oxygen masks 12, pull tabs coupled to each oxygen mask 12, to drop out oxygen mask storage compartment 22. Each of the passengers sitting below the aircraft overhead passenger service unit 109 may grasp one of the oxygen masks 12. After being activated, the oxygen supply 20 may supply an oxygen rich gas to the oxygen masks 12, in order to allow the passengers to breathe almost normally, even in case of a pressure loss within the passenger cabin 104.

Oxygen supply 20 may be activated in response to an emergency signal provided by a controller in response to a pressure loss within the passenger cabin. In various embodiments, oxygen supply 20 may be activated in response to a manual pull pin coupled to oxygen mask 12. Alternatively, the oxygen supply 20 may be activated in response to a first breath taken by a passenger through the oxygen mask 12.

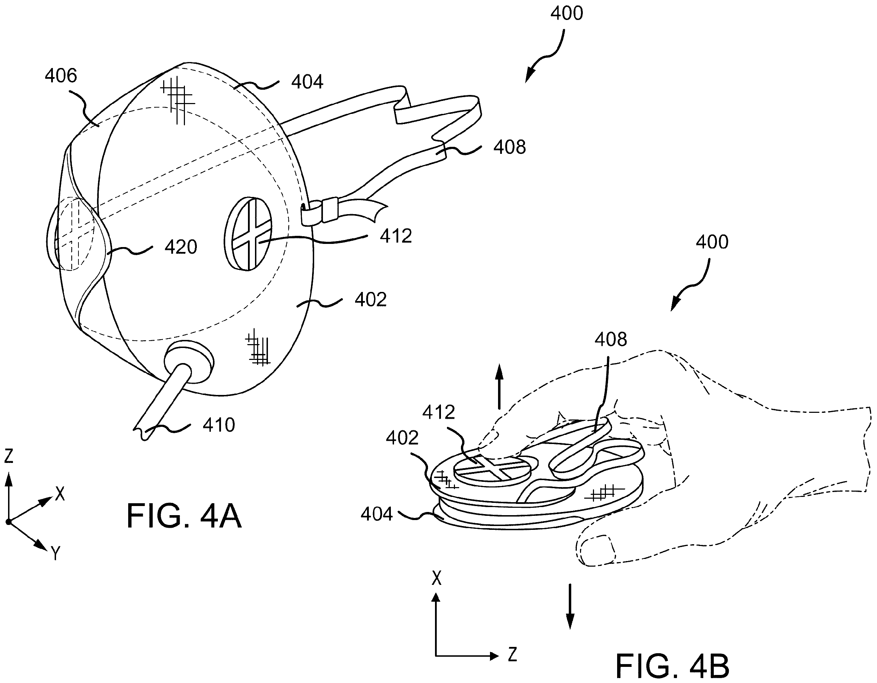

Referring now to FIGS. 4A and 4B, a collapsible passenger protective breathing equipment ("PPBE") 400, or oxygen mask, is illustrated, in accordance with various embodiments. In various embodiments, PPBE 400 may be stored in a passenger cabin (e.g., passenger cabin 104), a galley, a lavatory, and/or a crew rest area, among other locations on an aircraft. FIG. 4A illustrated PPBE 400 in an expanded state and FIG. 4B illustrated PPBE 400 in a collapsed state. PPBE 400 includes a flexible material 402, a first spring 404, a second spring 406, a strap 408, an oxygen supply hose 410, and one or more air valves 412, alternatively referred to as exhalation, ambient air, and/or oxygen valves. Flexible material 402 may include one or more of a polyester, a microfiber, a nylon, a woven fabric, an elastomer, a thermoplastic elastomer, or a thermoplastic material or film, among others. In various embodiments, flexible material 402 may additionally be coated in a flame retardant and/or include a flame retardant coated material. In various embodiments, flexible material 402 may be configured to overlap, or layer, when in the expanded state, such as at overlap point 420 in order to provide a pocket, volume, or reservoir for oxygen gas storage. In various embodiments, flexible material 402 may be a single piece of material with no overlap.

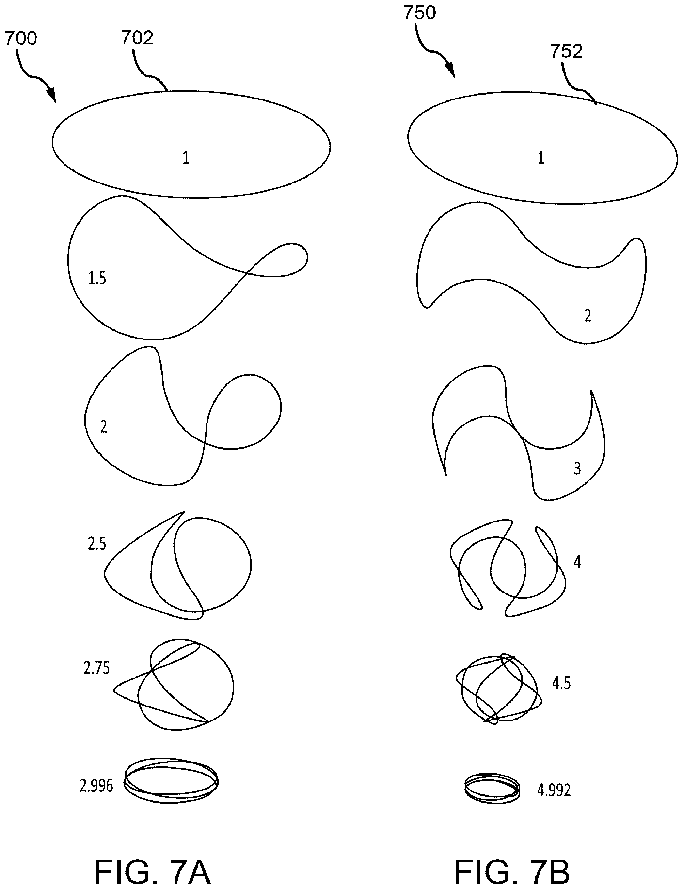

First spring 404 is located in and secured in place by flexible material 402 around an outer circumference of flexible material 402. That is, first spring 404 is approximately two dimensional (e.g., along the x-y plane) when PPBE 400 is in the expanded state. First spring 404 is placed to provide a secure fit around the nose and mouth of a passenger regardless of the size of the passenger's face. In various embodiments, flexible material 402 may include an opening sewn around an outer circumference that is configured to hold and secure first spring 404. In various embodiments, first spring 404 may include a memory material, a metal, a metal alloy, a carbon fiber, and/or a plastic material. In various embodiments, first spring 404 may be one of a ring spring, a buckled spring, an overcurved ring, or other ring configured to be folded over onto itself for storage. FIG. 7A illustrates first spring 404 folded to a ratio of 1:3 and FIG. 7B illustrates first spring 404 folded to a ratio of 1:5.

Second spring 406 is located in and secured in place by flexible material 402 around an interior circumference of flexible material 402. That is, second spring 406 is a three dimensional curve when PPBE 400 is in the expanded state. Second spring 406 is placed to provide shape to flexible material 402 and clearance for the passenger's nose when in the expanded state. In various embodiments, flexible material 402 may include an opening sewn around the inner circumference that is configured to hold and secure second spring 406. In various embodiments, second spring 406 may include a metal, a metal alloy, a carbon fiber, and/or a plastic material. In various embodiments, second spring 406 may be one of a ring spring, a buckled spring, an overcurved ring, or other ring configured to be folded over onto itself for storage.

Strap 408 is coupled to a first side (e.g., in the positive y-direction) and a second side (e.g., in the negative y-direction) of the face side (e.g., in the positive x-direction) of flexible material 402. In various embodiments, strap 408 may be looped through a first opening formed in the first side and a second opening formed in the second side. In various embodiments, strap 408 may be coupled to flexible material 402 by a buckle, a snap, or other fastener. In various embodiments, strap 408 may be adjustable in length. Strap 408 is configured to apply a force on flexible material 402 and first spring 404 that causes first spring 404 and flexible material 402 to conform to the face of the passenger. In various embodiments, strap 408 tends to bring an inner surface of flexible material 402 toward and against the face of the passenger.

Air hose 410 is coupled at one end to the front side (e.g., in the negative x-direction) of PPBE 400 and at the other end to an oxygen source located in the passenger service unit. In various embodiments, air hose 410 may be configured to detach from PPBE 400 in response to a force exerted on air hose 410 away from PPBE 400. In various embodiments, air hose 410 may be configured to detach from the passenger service unit in response to a force on air hose 410 exerted away from the passenger service unit.

Air valves 412 are located on, and pass through, flexible material 402. In various embodiments, air valves 412 may be a one-way valve that only allows air to exit PPBE 400. In various embodiments, a first air valve 412 may be configured to allow exhale gasses to exit PPBE 400 and a second air valve 412 may be configured to draw in additional air from outside PPBE 400. In various embodiments, air valves 412 may include a two-way valve allowing air to enter and exit PPBE 400. In various air valves 412 may include a filter and/or mesh to prevent debris from entering PPBE 400. In various embodiments, air valves 412 may include a plastic, a polymer, a fabric, a metal, a metal alloy, an elastomer (e.g., silicon), and/or a nylon material.

Referring momentarily to FIGS. 7A and 7B, diagrams for folding a metal ring are illustrated, in accordance with various embodiments. FIG. 7A illustrates a diagram 700 for folding a metal ring 702 three times and FIG. 7B illustrates a diagram 750 for folding a metal ring 752 five times. In various embodiments, metal rings 702, 752 may be examples of first spring 404 and/or second spring 406 described above in FIGS. 4A and 4B. As illustrated in FIGS. 7A and 7B, metal rings 702, 752 are folded over onto themselves so that each metal ring 702, 752 uses less space after folding than before folding.

Returning to FIGS. 4A and 4B, the folding illustrated in FIGS. 7A and 7B may be used with PPBE 400 to reduce the stored size of PPBE 400, as illustrated in FIG. 4B. PPBE 400 may retain the smaller stored size while a force is exerted onto PPBE 400 and/or so long as there is not enough room to expand (e.g., stored in a bag, a sleeve, a slot, and/or other compartment). PPBE 400 may, in various embodiments, open, or expand, to the expanded state illustrated in FIG. 4A in response to being released and/or provided sufficient room to expand. This allows PPBE 400 to be stored compactly while automatically expanding upon release for use by the passengers.

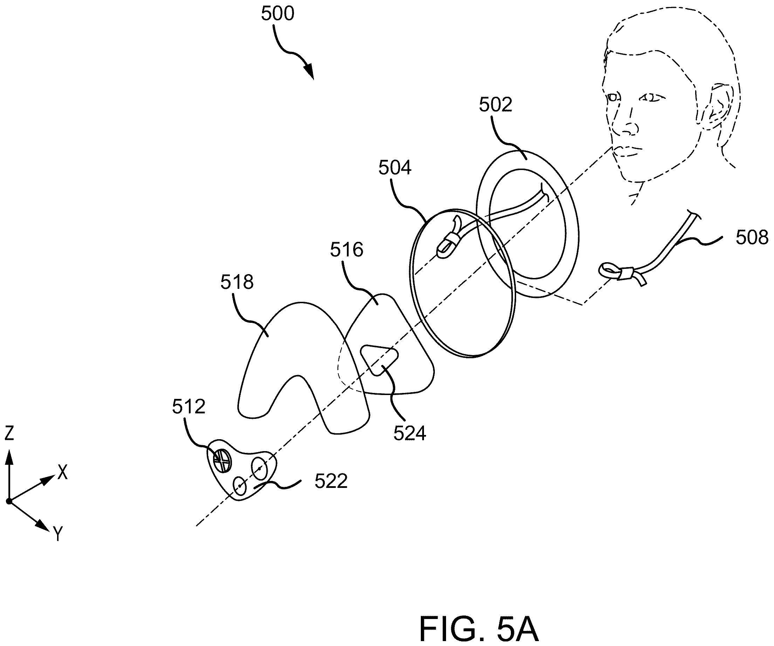

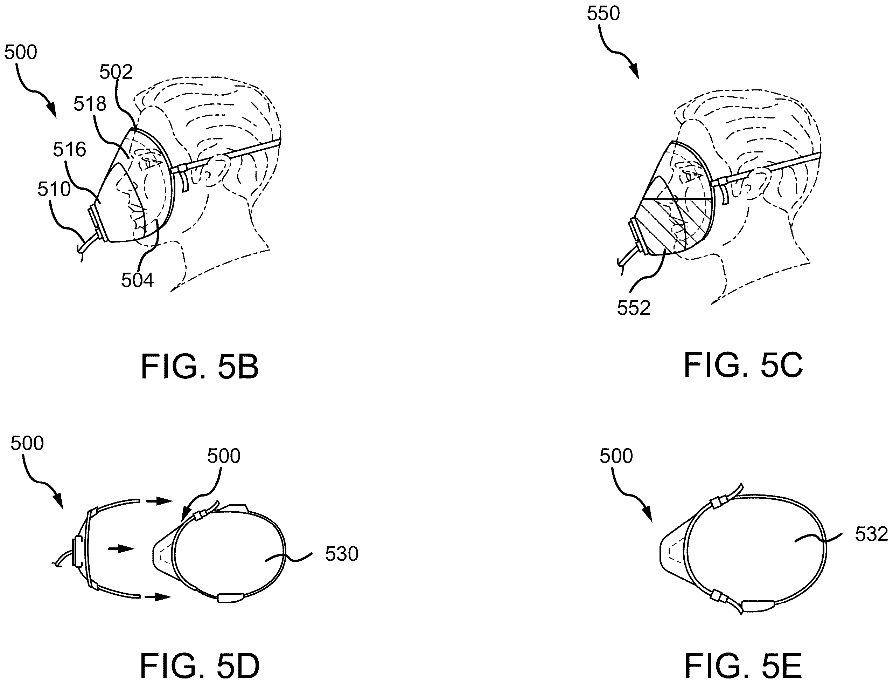

Referring now to FIGS. 5A-5E, a full face passenger protective breathing equipment ("PPBE"), PPBE 500, is illustrated, in accordance with various embodiments. FIGS. 5A illustrates an exploded view of the components of PPBE 500. FIG. 5B illustrates PPBE 500 placed on the head of a passenger. FIG. 5C illustrates an alternate embodiment of PPBE 500. FIG. 5D illustrates PPBE 500 prior to placement and after being secured to the head 530 of a passenger. FIG. 5E illustrates PPBE 500 flexibility when placed on the head 532 of a passenger, where head 532 is larger than head 530.

PPBE 500 includes similar components as PPBE 400 described in FIGS. 4A and 4B including a first flexible material 502, a spring 504, a strap 508, an air hose 510, and an air valve 512, descriptions of which may not be repeated below. As described above, spring 504 is located in and secured by first flexible material 502 around an outer circumference of first flexible material 502. Strap 508 is coupled to first flexible material 502 and/or spring 504 and is configured to pull spring 504 and first flexible material 502 to conform to the face of the passenger. Similar to PPBE 400, and as illustrated in FIGS. 7A and 7B, PPBE 500 is configured to fold onto itself to reduce its size for storage and to spring, or pop, open for ease of use by the passenger.

PPBE 500 further includes a second flexible material 516, a flexible clear film 518, and a flexible plate 522. The components of PPBE 500 are chosen so that they can coupled together into a single piece without the use of fasteners. For example, a high frequency welding, an adhesive, or sealing, technique may be used to couple, weld, bond, or join, in order, first flexible material 502, spring 504, strap 508, second flexible material 516, flexible clear film 518, and flexible plate 522. This simplifies assembly of PPBE 500 into one or two steps which reduces manufacturing costs.

Second flexible material 516 includes similar materials as first flexible material 502. In various embodiments, second flexible material 516 may include similar materials as first flexible material 502. In various embodiments, first flexible material 502 may use different materials than second flexible material 516. Second flexible material 516 includes an opening 524 that is configured to receive flexible plate 522. In various embodiments, second flexible material 516 may be a geometric shape such as a triangle, a square, a rectangle, a pentagon, a hexagon, or an oval, among other shapes.

Flexible clear film 518 includes one or more of a polyimide film (e.g., Kapton manufactured by DuPont), a polyvinyl chloride (PVC) material, a vinyl material, a polyetherimide (e.g., Ultem^{®}), or a semitransparent nylon material, among others. Flexible clear film 518 provides protection for the eyes of the passenger during an emergency situation in which smoke and/or other debris are present.

Flexible plate 522 is configured to hold air valve 512 and air hose 510. In various embodiments, flexible plate 522 may include one or more of a fabric, a carbon fiber, a metal, a metal alloy, a plastic, a thermoplastic elastomer, or an elastomer, among others. In various embodiments, flexible plate 522 may be coupled to second flexible material 516 prior to assembly of the full PPBE 500.

In various embodiments, the combination of second flexible material 516 and flexible clear film 518 may provide sufficient structure to cause a bulge away from the face of the passenger (e.g., in the negative x-direction) in order to accommodate the nose and mouth of the passenger. In various embodiments, PPBE 500 may include a second spring that extends laterally (e.g., along the y-axis) across PPBE 500 to provide space for the nose of the passenger and comfort for breathing.

FIG. 5C illustrates PPBE 550 including similar components as PPBE 500 described above and further including a rebreather reservoir 552. Rebreather reservoir 552 may, in various embodiments, store oxygen to the passenger in the event of the passenger moving from the seat and disconnects air hose 510. In various embodiments, rebreather reservoir 552 may provide a constant flow supply of oxygen until the next breath. During normal operation, each breath pull oxygen into PPBE 550. In various embodiments, rebreather reservoir 552 may store a portion of the oxygen received from each breath for later use.

In various embodiments, PPBE 500, 550 may further include an integrated air filter. In various embodiments, the integrated air filter may be adjacent second flexible material 516 or rebreather reservoir 552. In various embodiments, the integrated air filter may be a charcoal air filter. In various embodiments, the integrated air filter may not be exposed to the air until PPBE 500, 550 is disconnected from the passenger service unit. That is, a portion of PPBE 500, 550 may be removed, or ripped off, in response to a force exerted against air hose 510 exposing the integrated air filter for use. In various embodiments, air valves 512 may close in response to air hose 510 separating thereby forcing air to pass through the integrated air filter.

Additionally, or in the alternative, in various embodiments, PPBE 500 may further include an inflatable structure that is adjacent the face of the passenger. That is, the inflatable structure may be adjacent spring 504 and/or in place instead of spring 504. In various embodiments, the inflatable structure may be inflated by the first amount of oxygen or oxygen rich gas received through air hose 510 upon deployment. In various embodiments, as little as 0.1 L of air at about 8 to about 9 mbar of pressure may be used to inflate the inflatable structure.

Referring now to FIGS. 5D and 5E, PPBE 500 is illustrated away from the face of the passenger and on or against the face of the passenger. FIG. 5D illustrates PPBE 500 in a generally flat configuration before being placed on the face of the user. After securing PPBE 500 to the head of the passenger, PPBE 500 conforms to the face of the passenger to provide a better seal between PPBE 500 and the face of the passenger. FIG. 5E illustrates PPBE 500 on the face of a larger passenger, illustrating that the same PPBE 500 may conform to fit any size face and/or head shape. In various embodiments, PPBE 500 may inflate in response to the oxygen supply and thereby improve the seal of PPBE 500 on the face and/or head of the passenger.

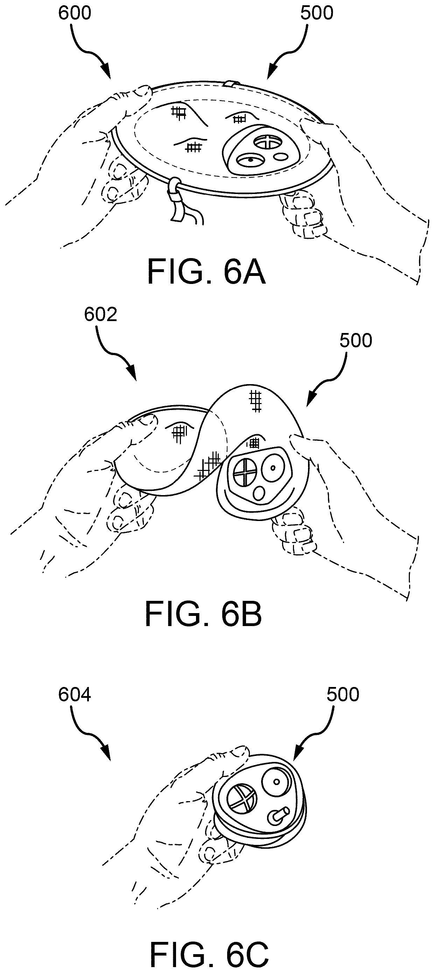

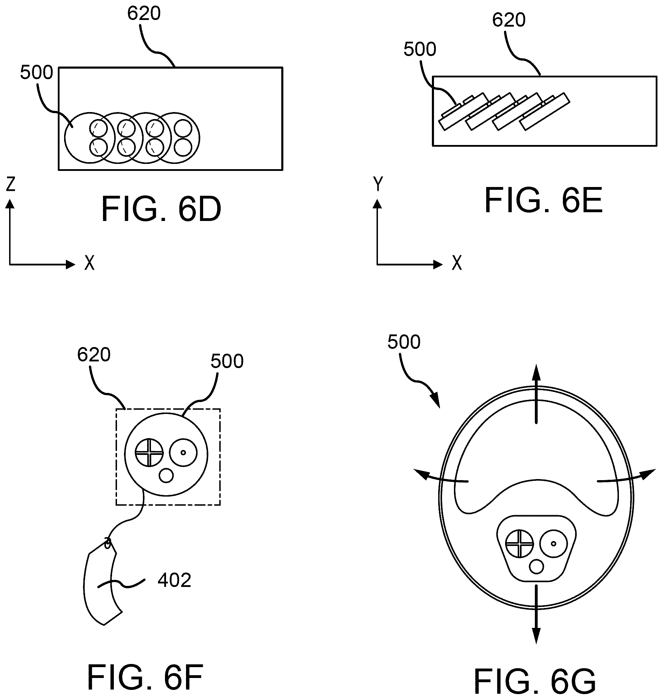

Referring now to FIGS. 6A-6G, the storage and use of PPBE 500 is illustrated, in accordance with various embodiments. FIGS. 6A-6C illustrated a method of folding PPBE 500 for storage is illustrated. FIGS. 6D and 6E illustrate the storage of multiple PPBE 500 in a passenger service unit. FIG. 6F and 6G illustrate the storage and deployment of PPBE 500.

FIG. 6A illustrates PPBE 500 in a flat configuration 600, having been pushed flat to begin the packing, or storage, process. FIG. 6B illustrated PPBE 500 in a first folded position 602 where spring 504 is being bent so that PPBE 500, including spring 504, is folded onto itself. Further description of the process is illustrated in FIGS. 7A and 7B and described above. FIG. 6C illustrates PPBE 500 in the stored position 604 having been folded onto itself. PPBE 500 can stay in the stored position 604 until it is deployed, at which point PPBE 500 will expand open for use.

FIGS. 6D and 6E illustrate four PPBE 500 units in the stored position within a mask storage compartment 620 of a passenger service unit. In various embodiments, mask storage compartment 620 may be an example of oxygen mask storage compartment 22 described above in FIG. 3. The four PPBE 500 units in the stored state do not utilize the entire space of storage compartment 620, as illustrated. Accordingly, in various embodiments, more PPBE 500 units may be stored in storage compartment 620. In various embodiments, storage compartment 620 may be designed to be smaller and provide more room in the passenger service unit for other components and/or passenger head space.

FIGS. 6F and 6G illustrate the deployment of PPBE 500, in accordance with various embodiments. PPBE 500 is stored in storage compartment 620 and includes a pull tag 640 that is coupled to a portion of PPBE 500. In the event of an emergency, storage compartment 620 opens and PPBE 500 is deployed. In various embodiments, PPBE 500 may deploy automatically and open up as illustrated in FIG. 6G. In various embodiments, PPBE 500 may not deploy correctly so that the passenger pulls on pull tag 640 to deploy PPBE 500. In various embodiments, PPBE 500 may not be configured to deploy automatically and the passenger may pull on pull tag 640 to deploy PPBE 500.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An oxygen mask, comprising:
a first flexible material having a first surface and a second surface;
a first spring disposed circumferentially around the first flexible material, the first spring providing structural support to the oxygen mask along a first plane, wherein the first flexible material and the first spring define an interior of the oxygen mask;
an air valve configured to allow air to pass between the interior of the oxygen mask and an exterior of the oxygen mask;
an air hose coupled to the oxygen mask and configured to allow an air flow into the oxygen mask; and
a strap coupled to the first flexible material and the first spring, wherein the strap is configured to pull the first flexible material and the first spring to conform to a 3D surface.

2. The oxygen mask of claim 1, further comprising:
a second spring disposed laterally across the first flexible material and providing structural support to the oxygen mask along a second plane that is orthogonal to the first plane.

3. The oxygen mask of claim 1 or 2, wherein the air valve is coupled to the first flexible material.

4. The oxygen mask of any preceding claim, wherein the air hose is coupled to the first flexible material.

5. The oxygen mask of any preceding claim, further comprising:
a second flexible material including an opening formed therethrough, the second flexible material defining a first portion of the oxygen mask; and
a flexible clear film coupled to the second flexible material, the flexible clear film defining a second portion of the oxygen mask.

6. The oxygen mask of claim 5, further comprising:
a flexible plate coupled to the second flexible material and configured to cover the opening formed in the second flexible material, wherein the air hose is coupled to the flexible plate, and wherein the air valve is coupled to the flexible plate.

7. The oxygen mask of any preceding claim, wherein the air hose is configured to detach from the oxygen mask in response to a force applied to the air hose.

8. A full face oxygen mask, comprising:
a first flexible material including a first opening formed therethrough, the first flexible material configured to contact a face of a passenger and the face of the passenger passing through the first opening;
a first spring coupled to the first flexible material and disposed around an outer circumference of the first flexible material, the first spring is configured to provide support to the first flexible material in a first plane;
a second flexible material coupled to the first spring and the first flexible material, the second flexible material including a second opening formed therethrough;
a flexible clear film coupled to the first flexible material and the second flexible material, wherein the second flexible material and the flexible clear film are configured to provide support to the full face oxygen mask in a second plane that is orthogonal to the first plane;
a flexible plate coupled to the second flexible material and covering the second opening;
an air hose coupled to the flexible plate and configured to provide air to the full face oxygen mask;
an air valve coupled to the flexible plate and configured to allow air to pass through the flexible plate;
a strap coupled to the first flexible material and the first spring, the strap configured to secure the full face oxygen mask to a 3D surface, including conforming the first flexible material and the first spring to a 3D surface.

9. The full face oxygen mask of claim 8, further comprising:
a rebreather reservoir coupled to the first flexible material and the second flexible material, the rebreather reservoir configured to store an amount of air for use after disconnecting the air hose.

10. The full face oxygen mask of claim 8 or 9, further comprising:
a second spring coupled to the second flexible material and the flexible clear film, the second spring providing structural support in the second plane; and/or
an inflatable structure coupled to the first flexible material and configured to inflate in response to air from the air hose, wherein the inflatable structure is disposed circumferentially around the first flexible material; and/or
wherein the first flexible material has an oval shape and the second flexible material has a geometric shape.

11. The full face oxygen mask of any of claims 8 to 10, further comprising:
an integrated air filter disposed between the first flexible material and the second flexible material, wherein the integrated air filter is exposed to the air in response to the air hose disconnecting from the full face oxygen mask;
wherein, optionally, the integrated air filter includes an activated filter media.

12. An oronasal passenger mask, comprising:
a first flexible material having a first surface and a second surface;
a first spring disposed circumferentially around the first flexible material, the first spring providing structural support to the oronasal passenger mask along a first plane, wherein the first flexible material and the first spring define an interior of the oronasal passenger mask;
a second spring disposed laterally across the first flexible material and providing structural support to the oronasal passenger mask along a second plane that is orthogonal to the first plane;
an air valve coupled to the first flexible material and configured to allow air to pass from the interior of the oronasal passenger mask to an exterior of the oronasal passenger mask;
an air hose coupled to the first flexible material and configured to allow an air flow into the oronasal passenger mask; and
a strap coupled to the first flexible material and the first spring.

13. The oronasal passenger mask of claim 12, wherein a first portion of the first flexible material extends from a first side to overlap a second portion of the first flexible material that extends from a second side opposite the first side.

14. The oronasal passenger mask of claim 12 or 13, wherein the first spring and the second spring are configured to be folded onto themselves into stored state;
wherein, optionally, the first spring and the second spring are configured to expand the oronasal passenger mask from the stored state to an expanded state for use.

15. The oronasal passenger mask of any of claims 12 to 14, wherein the strap is configured to pull the first flexible material and the first spring to conform to a 3D surface; and/or
an integrated air filter, wherein the integrated air filter is exposed in response to the air hose being removed.
